# FASCICULE DE BREVET EUROPEEN

(11) **EP 2 252 773 B1**
(45) Date de publication et mention de la délivrance du brevet: **12.09.2018**
(21) Numéro de dépôt: 09724842.1
(22) Date de dépôt: 13.03.2009
(51) Int. Cl.: F01D 11/00

(54) **DISTRIBUTEUR DE TURBINE POUR UNE TURBOMACHINE**
STATOR EINER TURBOMASCHINE
STATOR OF A TURBOMACHINE

(30) Priorité: 19.03.2008 FR 0801502
(43) Date de publication de la demande: 24.11.2010
(73) Titulaire: Safran Aircraft Engines, 75015 Paris (FR)
(72) Inventeur: FACHAT, Thierry, F-77550 Moissy Cramayel (FR); GIRARD, Patrick, Joseph, Marie, F-77310 Saint Fargeau Ponthierry (FR); SOUPIZON, Jean-Luc, F-77000 Vaux le Penil (FR)
(74) Mandataire: Pichat, Thierry
(86) Numéro de dépôt international: PCT/FR2009/000268
(87) Numéro de publication internationale: WO 2009/118490

(56) Documents cités:
- EP-A- 1 335 113
- GB-A- 2 022 720
- GB-A- 2 198 489
- US-A- 2 963 307
- US-A- 5 215 435
- US-A1- 2004 042 898

## Description

La présente invention concerne un distributeur de turbine pour une turbomachine telle qu'un turboréacteur ou un turbopropulseur d'avion.

Une turbine de turbomachine comprend plusieurs étages comportant chacun une roue à aubes et un distributeur. Chaque roue à aubes comprend un disque portant à sa périphérie externe des aubes sensiblement radiales, les disques des différentes roues étant reliés coaxialement les uns aux autres et à l'arbre d'entraînement du rotor de la turbine par des moyens appropriés.

Chaque distributeur comprend une plate-forme annulaire interne et une plate-forme annulaire externe entre lesquelles s'étendent des pales sensiblement radiales. La plate-forme externe du distributeur comprend des moyens d'accrochage et de fixation sur un carter externe de la turbine. Sa plate-forme annulaire interne porte des éléments annulaires en matériau abradable destinés à coopérer avec des léchettes annulaires externes d'un élément du rotor, de façon à former un joint d'étanchéité du type à labyrinthe. Ce joint d'étanchéité permet de piloter le débit d'air passant axialement à travers l'espace annulaire situé entre la périphérie interne du distributeur et le rotor de la turbine (GB-A-2 198 489, EP-A-1 335 113, US-A-2 963 307 et US-A-5 215 435).

Dans la technique actuelle, les éléments en matériau abradable sont portés par une couronne annulaire qui est reliée à la plate-forme interne du distributeur par une paroi radiale. La couronne, la paroi radiale et la plate-forme interne du distributeur sont formées d'une seule pièce de fonderie qui a des épaisseurs relativement importantes et donc une masse relativement élevée.

Cette technique connue présente un autre inconvénient majeur. En fonctionnement, les pales du distributeur sont exposées aux gaz chauds s'écoulant dans la veine de la turbine. La température des gaz dans la veine est relativement élevée, typiquement de l'ordre de 900°C, tandis que la température dans la zone comprise entre la plate-forme interne du distributeur et le rotor est plus faible et par exemple d'environ 700°C. L'épaisseur de la plate-forme et des moyens de support des éléments abradables leur confère une inertie thermique importante qui, combinée à la température plus faible à laquelle ils sont soumis, contrarie la dilatation thermique des pales du distributeur qui sont alors soumises à des contraintes mécaniques importantes. Il en résulte l'apparition de criques et de fissures sur ces pales dont la durée de vie est réduite de façon sensible.

Il a déjà été proposé de fixer les éléments abradables sur une tôle qui est elle-même fixée par des moyens du type vis/écrou ou analogue sur un rebord radial interne de la plate-forme interne. Cependant, ces moyens de fixation ont un encombrement axial et radial relativement important et leur utilisation augmente de manière significative l'encombrement et la masse du distributeur.

L'invention a notamment pour but d'apporter une solution simple, efficace et économique à ces problèmes.

Elle propose à cet effet un distributeur de turbine pour une turbomachine, tel que défini dans la revendication 1.

L'invention permet de réduire de manière significative, d'une part la masse des moyens de support des éléments en matériau abradable, et d'autre part l'épaisseur et l'inertie thermique de ces moyens, par rapport à la technique antérieure. En effet, les secteurs de tôle ont une épaisseur nettement inférieure à celle des pièces de fonderie utilisées dans la technique antérieure.

Par ailleurs, ces secteurs de tôle sont fixés de façon simple par soudage ou brasage directement sur la plate-forme interne du distributeur sans utilisation de moyens de fixation du type vis/écrou lourds et encombrants. Les pales du distributeur sont donc plus libres de se dilater thermiquement en fonctionnement, ce qui limite les contraintes et permet d'augmenter la durée de vie du distributeur.

Selon l'invention, les secteurs de tôle comportent une paroi radiale à rebord périphérique interne cylindrique et sont fixés par leur bord périphérique externe à la plate-forme. Les secteurs de tôle comprennent un rebord périphérique externe cylindrique plaqué et fixé sur la surface interne de la plate-forme interne.

Les éléments en matériau abradable peuvent être fixés sur les surfaces internes des rebords cylindriques des secteurs de tôle, ou éventuellement sur des secteurs d'une seconde tôle sensiblement cylindrique qui sont rapportés et fixés sur les surfaces internes des rebords cylindriques des secteurs de la première tôle.

Avantageusement, les secteurs de tôle comprennent des rebords s'étendant vers des disques de rotor adjacents de façon à limiter le passage de gaz chauds en direction radiale depuis la veine de la turbine radialement vers l'intérieur dans les espaces annulaires de logement des joints à labyrinthe. Les rebords des secteurs de tôle sont par exemple formés par des tôles annulaires fixées par brasage ou soudage sur les secteurs de tôle.

La plate-forme interne du distributeur selon l'invention est de préférence formée par une paroi cylindrique sectorisée, les secteurs de cette plate-forme étant réalisés de fonderie et portant des plaquettes d'étanchéité qui sont soudées ou brasées par une extrémité sur un secteur de plate-forme et qui sont appliquées en contact glissant à leur autre extrémité sur un secteur de plate-forme adjacent, au niveau des secteurs de tôle portant les éléments en matériau abradable.

L'invention concerne également une turbine de turbomachine, caractérisée en ce qu'elle comprend un distributeur du type précité, et une turbomachine, telle qu'un turboréacteur ou un turbopropulseur d'avion, caractérisée en ce qu'elle comprend une turbine équipée d'au moins un distributeur tel que décrit ci-dessus.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une demi-vue schématique en coupe axiale d'une turbine basse-pression d'une turbomachine, comportant des distributeurs selon la technique antérieure,
- la figure 2 est une demi-vue schématique partielle d'une turbine basse-pression d'une turbomachine, équipée de distributeurs selon l'invention, et
- la figure 3 est une vue correspondant à la figure 2 et représente des variantes de réalisation de l'invention.

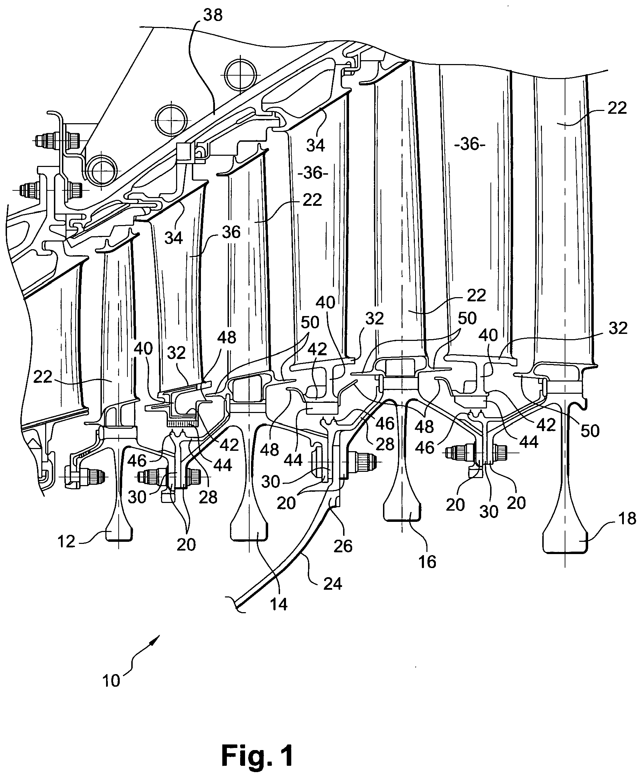

On se réfère d'abord à la figure 1 qui est une demi-vue schématique en coupe d'une turbine basse-pression 10 de turbomachine, selon un plan passant par l'axe de rotation du rotor de la turbine.

Le rotor de la turbine comprend quatre disques 12, 14, 16, 18 assemblés coaxialement les uns aux autres par des brides annulaires 20 et portant des rangées annulaires d'aubes mobiles 22 qui sont montées par des pieds d'aubes, par exemple en queue d'aronde ou analogue, à leurs extrémités radialement internes sur la périphérie externe des disques 12, 14, 16, 18. Le rotor est relié à un arbre de turbine par l'intermédiaire d'un cône d'entraînement 24 fixé au moyen d'une bride annulaire 26 entre les brides annulaires 20 des disques 14 et 16.

Des flasques annulaires 28 de retenue axiale des aubes mobiles sur les disques sont en outre montées entre les disques 12, 14, 16, 18 et comprennent chacun une paroi radiale 30 serrée axialement entre les brides annulaires 20 de deux disques adjacents.

Entre les rangées d'aubes mobiles 22 se trouvent des distributeurs qui comportent chacun deux plates-formes annulaires 32, 34, respectivement interne et externe, reliées entre elles par une rangée annulaire de pales fixes 36. Les plates-formes externes 34 des distributeurs sont accrochées par des moyens appropriés sur un carter 38 de la turbine basse-pression. Les plates-formes internes 32 des distributeurs comprennent chacune une paroi radiale 40 qui s'étend radialement vers l'intérieur depuis une surface interne de la plate-forme et qui est reliée à sa périphérie interne à une couronne cylindrique 42 de support d'éléments annulaires 44 en matériau abradable.

Ces éléments abradables 44 sont agencés radialement à l'extérieur et en regard de léchettes annulaires externes 46 portées par les flasques 28. Les léchettes 46 sont destinées à coopérer par frottement avec les éléments 44 de façon à former des joints à labyrinthe et à limiter le passage d'air en direction axiale à travers ces joints.

La couronne cylindrique 42 comprend en amont et en aval des rebords annulaires 48 qui s'étendent sensiblement axialement du côté opposé à la paroi radiale 40 de la plate-forme interne 32 du distributeur. Des becquets 50 amont et aval sensiblement cylindriques sont formés en saillie axiale sur les pieds des aubes mobiles 22 et coopèrent par effet de chicane avec ces rebords annulaires 48 et avec les bords amont et aval des plates-formes internes 32 pour limiter le passage de gaz chauds depuis la veine de la turbine radialement vers l'intérieur au niveau des joints à labyrinthe.

La couronne 42 et la paroi radiale 40 de chaque distributeur sont formées d'une seule pièce de fonderie avec la plate-forme interne 32 de ce distributeur, ce qui se traduit par de nombreux inconvénients décrits plus haut.

L'invention permet de remédier au moins partiellement à ces problèmes en fixant les éléments abradables 44 à la plate-forme 32 du distributeur au moyen de secteurs de tôle annulaire, ces secteurs de tôle étant brasés ou soudés aux éléments abradables et à la plate-forme interne du distributeur.

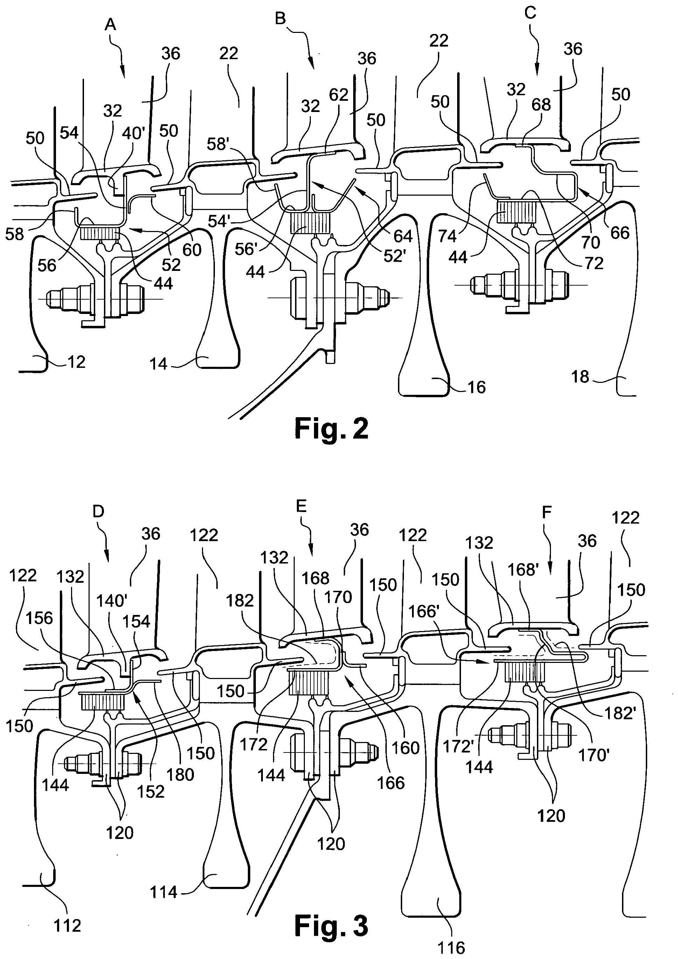

Dans l'exemple de réalisation de la figure 2, la turbine comprend trois distributeurs A, B, C qui sont chacun équipé de secteurs de tôle d'un type particulier.

La plate-forme interne 32 du distributeur amont A comprend une nervure radiale 40' qui s'étend vers l'intérieur depuis la surface interne de la plate-forme. Cette nervure radiale 40' a une épaisseur et une dimension en direction radiale nettement inférieures à celles de la paroi radiale 40 de la figure 1.

Les secteurs de tôle 52 de support des éléments abradables 44 ont ici en section une forme sensiblement en L et comportent chacun une paroi radiale 54 qui est reliée à sa périphérie interne à l'extrémité aval d'une paroi cylindrique 56 dont l'extrémité amont est reliée à un rebord radial externe 58. La périphérie externe de la paroi radiale 52 est appliquée et fixée par soudage ou brasage sur la face aval de la nervure radiale 40' du distributeur A. Les éléments abradables 44 sont fixés par brasage ou soudage sur les surfaces internes des parois cylindriques 56 des secteurs de tôle. Les rebords 58 des secteurs de tôle s'étendent vers l'extérieur jusqu'à une faible distance radiale du becquet aval 50 du disque de rotor 12 situé en amont du distributeur A.

Une tôle annulaire 60 à section en forme de L est agencée en aval des secteurs de tôle 52 et comprend une partie amont radiale appliquée et fixée par soudage ou brasage sur la face aval des parois radiales 54 des secteurs de tôle 52, et une partie cylindrique qui s'étend vers l'aval radialement à l'intérieur et à faible distance radiale du becquet amont 50 du disque de rotor 14 situé directement en aval du distributeur A.

Le becquet aval du disque 12 et le becquet amont du disque 14 coopèrent par effet de chicane respectivement avec le bord amont de la plate-forme 32 du distributeur A et les rebords externes 58 des secteurs de tôle 52, et avec le bord aval de la plate-forme 32 et la partie cylindrique de la tôle 60, pour limiter le passage de gaz chauds en direction radiale depuis la veine de la turbine dans l'espace annulaire de logement du joint à labyrinthe.

Les moyens de support des éléments abradables 44 du distributeur intermédiaire B comprennent des secteurs de tôle annulaire 52' qui sont similaires aux secteurs de tôle 52 du distributeur A, la paroi radiale 54' de chaque secteur de tôle étant en outre reliée à sa périphérie externe à un rebord cylindrique 62 orienté vers l'aval et appliqué et fixé par soudage ou brasage sur la surface interne de la plate-forme interne 32. Cette plate-forme 32 ne comprend pas de paroi radiale 40 ou de nervure radiale 40'. Les secteurs de tôle 52' ont en section une forme sensiblement en S.

Une tôle annulaire 64 à section sensiblement en U est en outre fixée par soudage ou brasage sur les secteurs de tôle 52' et les éléments abradables 44. Cette tôle 64 comprend une patte annulaire amont qui s'étend radialement vers l'extérieur et qui est appliquée et fixée sur la face aval des parois radiales 54' des secteurs de tôle 52'. La partie médiane sensiblement cylindrique de la tôle 64 est fixée sur les éléments abradables. La patte annulaire aval de la tôle 52' s'étend de manière tronconique en aval et vers l'extérieur, son extrémité aval étant située radialement à l'intérieur et à faible distance radiale du becquet amont 50 du disque 16.

Les becquets 50 des disques 14, 16 coopèrent par effet de chicane avec les bords amont et aval de la plate-forme 32 du distributeur B, les rebords amont 58' des secteurs de tôle 52' et la patte aval de la tôle 64, comme décrit précédemment.

Les moyens de support équipant le distributeur aval C comprennent des secteurs de tôle annulaire 66 à section sensiblement en C ou en U dont l'ouverture est orientée axialement vers l'amont. Chaque secteur de tôle 66 comprend un rebord cylindrique radialement externe 68 qui est appliqué et fixé par soudage ou brasage sur la surface interne de la plate-forme 32 qui est identique à celle du distributeur B. L'extrémité aval de ce rebord 68 est reliée à la périphérie externe d'une paroi annulaire coudée 70 qui s'étend d'amont en aval vers l'intérieur et dont la périphérie interne est reliée à l'extrémité aval d'une paroi cylindrique interne 72. Les éléments 44 en matériau abradable sont fixés sur les surfaces internes de ces parois cylindriques 72. La partie d'extrémité aval de la paroi annulaire 70 est située radialement à l'intérieur et au voisinage du becquet amont 50 du disque 18 pour limiter les fuites d'air entre la paroi 70 et le becquet 50.

Une tôle annulaire 74 à section sensiblement en L est fixée par soudage ou brasage à son extrémité aval sur les surfaces externes des parois cylindriques 72 des secteurs de tôle. La partie d'extrémité amont de cette tôle 74 s'étend radialement vers l'extérieur jusqu'au voisinage du becquet aval 50 du distributeur B. Ce becquet 50 coopère par effet de chicane avec le bord amont de la plate-forme 32 du distributeur C et avec la tôle 74.

Le distributeur C ne comprend pas de tôle en aval des secteurs de tôle 66 destinée à coopérer avec le becquet amont du disque situé en aval, comme c'est le cas pour les distributeurs A et B avec les tôles 60 et 64, respectivement. Au contraire, la géométrie des secteurs de tôle 66 du distributeur C a été adaptée pour qu'ils coopèrent directement par effet de chicane avec le becquet amont 50 du disque 18 afin de limiter les fuites d'air.

Les moyens de support des éléments abradables 44 représentés en figure 2 sont conçus pour pouvoir remplacer les moyens de support de la technique antérieure (figure 1), c'est-à-dire que les moyens de support selon l'invention sont adaptés, de par leur géométrie et leur configuration, à l'environnement de la turbine de la figure 1 pour être montés à la place des moyens de support existants. Ce remplacement peut avoir lieu lors d'une opération de maintenance de la turbine.

Dans les variantes de réalisation représentées en figure 3, du fait du faible encombrement en directions axiale et radiale des moyens de support des éléments abradables selon l'invention, le rotor de la turbine a été reconçu pour diminuer les dimensions radiales de la turbine et ainsi diminuer la masse de cette turbine. Les brides 120 de fixation des disques ont en particulier été reconfigurées et redimensionnées pour que les léchettes 46 des flasques 28 soient rapprochées des périphéries internes des rangées d'aubes mobiles 122.

Les secteurs de tôle de support des éléments abradables de la figure 3 ont donc des dimensions en direction radiale inférieures à celles des secteurs de tôle de la figure 2.

La plate-forme 132 du distributeur D est similaire à celle du distributeur A de la figure 2. Les secteurs de tôle 152 de ce distributeur sont à section en L, la paroi radiale 154 de chacun de ces secteurs étant fixée par brasage ou soudage à sa périphérie externe sur la face aval de la nervure radiale interne 140' de la plate-forme 132 du distributeur. Les parois cylindriques 156 de leurs secteurs de tôle s'étendent vers l'amont depuis la périphérie interne des parois radiales 154, et leurs surfaces internes sont appliquées et fixées par soudage ou brasage sur la surface externe d'une autre tôle 180 sensiblement cylindrique. Cette autre tôle 180 s'étend en direction axiale radialement à l'intérieur et à faible distance radiale des becquets aval et amont des disques 112, 114, respectivement, pour coopérer par effet de chicane avec ces becquets. Les éléments 144 en matériau abradable sont fixés sur la surface interne de cette tôle 180.

Le distributeur intermédiaire E de la turbine comprend des secteurs de tôle annulaire 166 à section sensiblement en C dont les parois cylindriques externes 168 sont fixées par brasage ou soudage sur la surface interne de la plate-forme 132 du distributeur C. Les parois cylindriques internes 172 des secteurs de tôle 166 s'étendent à leurs extrémités amont radialement à l'intérieur et à faible distance radiale du becquet aval du disque 114. Ces parois cylindriques 172 ne sont pas reliées à un rebord radial externe ou à une tôle supplémentaire destinée à coopérer avec le becquet aval 150 du disque 114.

Une tôle annulaire 160 sensiblement en L est fixée à son extrémité amont sur les faces aval des parois radiales 170 des secteurs de tôle 166 et s'étend en aval radialement à l'intérieur et à faible distance radiale du becquet amont 150 du disque 116.

Les moyens de support des éléments abradables 144 du distributeur aval F comprennent des secteurs de tôle 166' similaires à ceux du distributeur C de la figure 2, ces moyens de support étant dépourvus de tôle 74. Chaque secteur de tôle 166' comprend une paroi annulaire 170' reliée à sa périphérie externe à un rebord cylindrique 168' fixé sur la plate-forme 132 et à sa périphérie interne à une paroi cylindrique 172' portant des éléments 144 en matériau abradable, ce secteur de tôle 166' correspondant au secteur de tôle 66 de la figure 2, après aplatissement ou diminution de sa dimension radiale, et s'étendant au voisinage du becquet 150 pour limiter les fuites d'air.

Les plates-formes 32, 132 des distributeurs sont chacune formée par une paroi cylindrique sectorisée comportant plusieurs secteurs disposés circonférentiellement bout à bout les uns derrière les autres. Les tôles annulaires 60, 64, 74, 180 et 160 sont également sectorisées. Les secteurs des plates-formes internes 32, 132 et des tôles annulaires 52, 52', 66, 152, 166, 166' et 60, 64, 74, 180, 160 ont des dimensions en direction circonférentielle sensiblement identiques et sont alignés les uns aux autres en direction radiale.

L'étanchéité entre les secteurs de plates-formes est assurée au moyen de plaquettes qui sont fixées par brasage ou soudage par une extrémité sur un secteur de plate-forme et qui sont appliquées en contact glissant à leur autre extrémité sur un secteur de plate-forme adjacent. Ces plaquettes sont schématiquement représentées par des traits en pointillé 182, 182' en figure 3.

Des plaquettes d'étanchéité 182 à section sensiblement en C sont agencées radialement à l'intérieur de la plate-forme 132 du distributeur E, en amont des secteurs de tôle 166'. Chaque plaquette est fixée par leurs extrémités radialement externes sur la surface interne d'une plate-forme et est montée coulissante en direction circonférentielle sur la surface interne d'une plate-forme adjacente. Ces plaquettes 182 sont conformées pour épouser avec un faible jeu la forme des secteurs de tôle 166, au niveau des espaces entre deux secteurs de tôle adjacents, afin de limiter le passage de gaz à travers ces espaces.

Des plaquettes d'étanchéité 182' sont agencées en amont et en aval des secteurs de tôle 166' du distributeur F, leurs extrémités radialement externes étant fixées sur la plate-forme 132 du distributeur comme précédemment décrit. Ces plaquettes d'étanchéité sont également disposées au niveau des espaces inter-secteurs des secteurs de tôle 166' pour limiter le passage de gaz entre ces secteurs.

Tous les secteurs de tôle 52, 52', 70, 152, 166, 166' peuvent être recouverts en amont et/ou en aval de ce type de plaquettes d'étanchéité qui sont fixées à leurs extrémités radialement externes sur les plates-formes internes des distributeurs.

## Revendications

1. Distributeur de turbine pour une turbomachine, comprenant deux plates-formes annulaires, respectivement interne (32) et externe (34), reliées par des pales (36) sensiblement radiales, la plate-forme interne (32) étant dépourvue de nervure radiale et portant des éléments annulaires (44) en matériau abradable destinés à coopérer avec des léchettes annulaires (46) d'un rotor de la turbomachine pour former un joint d'étanchéité du type à labyrinthe, **caractérisé en ce que** les éléments annulaires en matériau abradable sont portés par des secteurs de tôle annulaire (52, 52', 66, 152, 166, 166') à section sensiblement en L, en S ou en C qui sont montés radialement à l'intérieur de la plate-forme interne (32) et qui ont chacun leur périphérie externe fixée par brasage ou soudage sur la plate-forme interne et leur périphérie interne fixée par brasage ou soudage sur un élément (44) en matériau abradable ou sur une tôle (180) fixée sur un élément en matériau abradable, les secteurs de tôle comprenant un rebord périphérique externe cylindrique (62, 68, 168, 168') plaqué et fixé sur la surface interne de la plate-forme interne (32, 132).

2. Distributeur selon la revendication 1, **caractérisé en ce que** les secteurs de tôle (52, 52', 66, 152, 166, 166') comportent une paroi radiale à rebord périphérique interne cylindrique et sont fixés par leur bord périphérique externe à la plate-forme interne (32).

3. Distributeur selon la revendication 2, **caractérisé en ce que** les éléments (44) en matériau abradable sont fixés sur les surfaces internes des rebords cylindriques (56, 56', 72, 172, 172') des secteurs de tôle.

4. Distributeur selon l'une des revendications 2 à 3, **caractérisé en ce que** les secteurs de tôle (52, 52', 66, 152, 166, 166') comprennent des rebords s'étendant vers des disques de rotor (12, 14, 16, 18) adjacents pour s'opposer aux sorties de gaz chauds vers le rotor.

5. Distributeur selon la revendication 4, **caractérisé en ce que** les rebords des secteurs de tôle sont formés par des tôles annulaires (60, 64, 74, 160) fixées par brasage ou soudage sur les secteurs de tôle (52, 52', 66, 166).

6. Distributeur selon l'une des revendications précédentes, **caractérisé en ce que** sa plate-forme interne (32, 132) est une paroi cylindrique sectorisée, les secteurs de plate-forme étant réalisés de fonderie et portant des plaquettes d'étanchéité (182, 182') qui sont soudées ou brasées par une extrémité sur un secteur de plate-forme et qui sont appliquées en contact glissant à leur autre extrémité sur un secteur de plate-forme adjacent, au niveau des secteurs de tôle (52, 52', 66, 152, 166, 166') portant les éléments en matériau abradable.

7. Turbine de turbomachine, **caractérisée en ce qu'**elle comprend au moins un distributeur selon l'une des revendications précédentes.

8. Turbomachine, telle qu'un turboréacteur ou un turbopropulseur d'avion, **caractérisée en ce qu'**elle comprend une turbine équipée d'au moins un distributeur selon l'une des revendications 1 à 6.

## Patentansprüche

1. Turbinen-Leitschaufel für ein Turbotriebwerk, enthaltend zwei ringförmige Plattformen, nämlich eine innere (32) und eine äußere (34), die über im Wesentlichen radial verlaufende Schaufelblätter (36) verbunden sind, wobei die innere Plattform (32) keine radiale Rippe aufweist und ringförmige Elemente (44) aus abreibbarem Material trägt, die dazu bestimmt sind, mit ringförmigen Abstreifern (46) eines Rotors des Turbotriebwerks zusammenzuwirken, um eine Dichtung vom Typ Labyrinthdichtung zu bilden, **dadurch gekennzeichnet, dass** die ringförmigen Elemente aus abreibbarem Material von Ringblechsektoren (52, 52', 66, 152, 166, 166') mit im Wesentlichen L-, S- oder C-förmigem Querschnitt getragen werden, die radial innerhalb der inneren Plattform (32) angebracht sind und jeweils mit ihrem Außenumfang durch Verlöten oder Verschweißen an die innere Plattform und mit ihrem Innenumfang durch Verlöten oder Verschweißen an ein Element (44) aus abreibbarem Material oder an ein Blech (180) befestigt sind, das an ein Element aus abreibbarem Material befestigt ist, wobei die Blechsektoren eine äußere, zylindrische Umfangsrandleiste (62, 68, 168, 168') aufweisen, die an die Innenfläche der inneren Plattform (32, 132) angelegt und befestigt ist.

2. Leitschaufel nach Anspruch 1, **dadurch gekennzeichnet, dass** die Blechsektoren (52, 52', 66, 152, 166, 166') eine radiale Wand mit innerer, zylindrischer Umfangsrandleiste aufweisen und an ihrem äußeren Umfangsrand an die innere Plattform (32) befestigt sind.

3. Leitschaufel nach Anspruch 2, **dadurch gekennzeichnet, dass** die Elemente (44) aus abreibbarem Material an die Innenflächen der zylindrischen Randleisten (56, 56', 72, 172, 172') der Blechsektoren befestigt sind.

4. Leitschaufel nach einem der Ansprüche 2 bis 3, **dadurch gekennzeichnet, dass** die Blechsektoren (52, 52', 66, 152, 166, 166') Randleisten enthalten, die sich zu angrenzenden Rotorscheiben (12, 14, 16, 18) hin erstrecken, um den Heißgasauslässen zum Rotor hin gegenüberzuliegen.

5. Leitschaufel nach Anspruch 4, **dadurch gekennzeichnet, dass** die Randleisten der Blechsektoren aus ringförmigen Blechen (60, 64, 74, 160) gebildet sind, die durch Verlöten oder Verschweißen an die Blechsektoren (52, 52', 66, 166) befestigt sind.

6. Leitschaufel nach einem der vorangehenden Ansprüche, **dadurch gekennzeichnet, dass** dessen innere Plattform (32, 132) eine sektorierte, zylindrische Wand ist, wobei die Plattformsektoren als Gussstücke ausgebildet sind und Abdichtplatten (182, 182') tragen, die mit einem Ende an einen Plattformsektor angeschweißt oder angelötet sind und mit ihrem anderen Ende an einen angrenzenden Plattformsektor in Gleitkontakt anliegen, und zwar im Bereich der Blechsektoren (52, 52', 66, 152, 166, 166'), welche die Elemente aus abreibbarem Material tragen.

7. Turbine für Turbotriebwerke, **dadurch gekennzeichnet, dass** sie zumindest einen Leitschaufelapparat nach einem der vorangehenden Ansprüche enthält.

8. Turbotriebwerk, wie etwa Turbostrahltriebwerk oder Turboprop-Triebwerk für Flugzeuge, **dadurch gekennzeichnet, dass** es eine Turbine enthält, die mit zumindest einem Leitschaufelapparat nach einem der Ansprüche 1 bis 6 versehen ist.

## Claims

1. A turbine nozzle for a turbomachine, the nozzle comprising two annular platforms, respectively an inner platform (32) and an outer platform (34), connected together by substantially radial vanes (36), the inner platform (32) being devoid of radial groove and carrying annular elements (44) of abradable material for cooperating with annular lips(46) of a rotor of the turbomachine in order to form a labyrinth type seal, the nozzle being **characterized in that** the annular elements of abradable material are carried by annular sheet-metal sectors (52, 52', 66, 152, 166, 166') of substantially L-, S-, or C-shaped section that are mounted radially inside the inner platform (32) and each of which is fastened by brazing or welding at its outer periphery to the inner platform and at its inner periphery to an element (44) of abradable material or to a piece of sheet metal (180) fastened to an element of abradable material, the sheet-metal sectors comprising an outer peripheral rim (62, 68, 168, 168') pressed against fastened by its outer peripheral rim to the inner platform (32, 132).

2. A nozzle according to claim 1, **characterized in that** each sheet-metal sector (52, 52', 66, 152, 166, 166') has a radial wall with a cylindrical inner peripheral rim and is fastened via its outer peripheral edge to the inner platform (32).

3. A nozzle according to claim 2, **characterized in that** the abradable material elements (44) are fastened to the inside surfaces of the cylindrical rims (56, 56', 72, 172, 172') of the sheet-metal sectors.

4. A nozzle according to any one of claims 2 to 3, **characterized in that** each sheet-metal sector (52, 52', 66, 152, 166, 166') has a rim extending towards the adjacent rotor disks (12, 14, 16, 18) to face hot gas escaping towards the rotor.

5. A nozzle according to claim 4, **characterized in that** the rims of the sheet-metal sectors are formed by annular pieces of sheet-metal (60, 64, 74, 160) fastened to the sheet-metal sectors (52, 52', 66, 166) by brazing or welding.

6. A nozzle according to any preceding claim, **characterized in that** its inner platform (32, 132) is a sectorized cylindrical wall, the sectors of the platform being castings and carrying sealing strips (182, 182') that are welded or brazed at one end on a platform sector and that are pressed in sliding contact at the other end against an adjacent platform sector in register with the sheet-metal sectors (52, 52', 66, 152, 166, 166') carrying the abradable material elements.

7. A turbomachine turbine, **characterized in that** it includes at least one nozzle according to any preceding claim.

8. A turbomachine such as an airplane turboprop or turbojet, **characterized in that** it includes a turbine fitted with at least one nozzle according to any one of claims 1 to 6.
